# EUROPÄISCHE PATENTANMELDUNG

(11) **EP 2 181 602 A1**
(43) Veröffentlichungstag der Anmeldung: **05.05.2010**
(21) Anmeldenummer: 09013575.7
(22) Anmeldetag: 28.10.2009
(51) Int. Cl.: A22C 11/12, B65B 51/04, G01L 5/00

(54) **Clipdrucküberwachung mit Piezo-Aufnehmer**

(30) Priorität: 28.10.2008 DE 102008053456
(71) Anmelder: Poly-clip System GmbH & Co. KG, 60489 Frankfurt am Main (DE)
(72) Erfinder: Meyrahn, Joachim, Dr., 64390 Erzhausen (DE); Freiberger, Gerd, 91275 Auerbach (DE)
(74) Vertreter: Eisenführ, Speiser & Partner

(57) **Zusammenfassung**

Die Erfindung betrifft eine Clipmaschine (100) zum Abteilen und Verschließen von mit Füllgut befüllten schlauchförmigen Verpackungen mittels Verschlussklammern, mit wenigstens einer ersten und einer zweiten Verschließwerkzeugeinheit, die zum Setzen und Verschließen wenigstens einer Verschlussklammer (Clip) relativ zueinander zwischen einer Öffnungsstellung und einer Verschlussstellung reversibel bewegbar sind, wobei wenigstens ein mit einer der Verschließwerkzeugeinheiten verbundener Piezo-Aufnehmer (138) vorgesehen ist, der eingerichtet ist, eine beim Verschließen einer Verschlussklammer aufgebrachte Verschlusskraft zu messen und einen die Verschlusskraft repräsentierenden Messwert auszugeben.

## Beschreibung

Die Erfindung betrifft eine Clipmaschine zum Abteilen und Verschließen von mit Füllgut befüllten schlauchförmigen Verpackungen sowie ein Verfahren zum Steuern einer solchen Clipmaschine gemäß den Oberbegriffen der Ansprüche 1 und 11.

Im Besonderen betrifft die Erfindung eine Clipmaschine zum Abteilen und Verschließen von mit Füllgut befüllten, schlauchförmigen Verpackungen mittels Verschlussklammern, mit mindestens einer ersten und einer zweiten Verschließwerkzeugeinheit, die zum Setzen und Verschließen wenigstens einer Verschlussklammer (Clip) relativ zueinander zwischen einer Öffnungsstellung und einer Verschlussstellung reversibel bewegbar sind. Ferner betrifft die Erfindung ein Verfahren zum Steuern einer solchen Clipmaschine.

Mit einer Clipmaschine der eingangs genannten Art werden typischerweise mit flüssigem bis zähpastösem oder auch (teilweise) granularem Inhalt befüllte Beutel oder schlauchförmige Verpackungen (Schlauchhülle oder Darm) verschlossen. Zunächst wird bei diesem Vorgang das Füllgut in die Verpackung eingebracht und im Fall einer schlauchförmige Verpackung danach mittels Verdrängelementen in Portionen abgeteilt. Die Verdrängelemente schnüren dazu die Schlauchhülle in radialer Richtung ein und verdrängen das in dem Einschnürbereich befindliche Füllgut in axialer Richtung - bezogen auf die Schlauchachse. Im Einschnürbereich wird so ein Schlauchzopf gebildet. Auf den gebildeten Schlauchzopf werden im nächsten Arbeitstakt ein oder im Fall einer Doppelclipanordnung zwei Verschlusselemente, wie Verschlussklammern oder Clips, mittels der zwei gegeneinander bewegten Verschließwerkzeuge aufgebracht. Die Verschließwerkzeuge umfassen paarweise jeweils einen Stempel und eine Matrize, zwischen welchen der Clip während des Verschließens bis zum Erreichen der Verschlussstellung (Umkehrpunkt der Bewegung) umgeformt wird. Nach dem Verschließen werden die Verschließwerkzeuge in ihre Ausgangs- oder Öffnungsstellung zurückbewegt.

An die Qualität eines solchen Verschlusses werden hohe Anforderungen gestellt. Einerseits darf er nicht so fest sein, dass die Verpackungshülle beim Verschließen beschädigt wird, wodurch Füllgut austreten oder kontaminiert werden kann. Andererseits muss der Verschluss aber ausreichend dicht sein, so dass beispielsweise bei einer nachfolgender Behandlung des verschlossenen Produkts diese nicht von der Verpackungshülle abrutscht.

Um einen sicheren Verschluss der Verschlussclips zu gewährleisten, wird bei bekannten Clipmaschinen der Verschlussabstand oder Verschlusshöhe, d.h. der geringste Abstand zwischen Stempel und Matrize, wenn der Clip um den Schlauchzopf herum verschlossen wird, überprüft und eingestellt. Dazu wird bekanntermaßen die Ruhelage wenigstens eines der Verschließwerkzeuge verändert.

Aus der EP-Patentanmeldung 0 900 733 ist eine Clipmaschine bekannt, die einen Distanzsensor zum Erfassen des Verschlussabstands mit bezüglich der Verschließwerkzeuge ortsfest angeordnetem Distanzsensor und Referenzfläche aufweist. Dies ermöglicht, dass tatsächlich eine der Verschlussklammerhöhe entsprechende Größe erfasst werden kann. Jedoch unterliegt der Distanzsensor direkt den auf die Verschließwerkzeuge wirkenden Beschleunigungskräften, da er fest mit diesen verbunden ist und mit ihnen mitbewegt wird. Je nach Empfindlichkeit des Sensors kann hierdurch dessen Funktion beeinträchtigt oder der Sensor selbst beschädigt werden, wodurch ein sicheres und genaues Erfassen des Verschlussabstands nicht mehr gewährleistet ist. Eine weitere mögliche Fehlerquelle bilden hier die Anschlussleitungen des Distanzsensors, die aufgrund der Bewegung des Sensors bei jedem Verschließvorgang ebenfalls bewegt und verformt werden und hierdurch beschädigt werden können.

Aus der DE-Offenlegungsschrift 10 2005 026 219 ist weiterhin eine Clipmaschine bekannt, bei der eine Messeinrichtung vorgesehen ist, die die Einfederung bzw. den Federweg einer Feder beim Verschließen eines Clips erfasst, hieraus eine Verschlusskraft ableitet und diese mit vorgegebenen Werten vergleicht. Wird ein vorgegebener Wert für den Federweg überschritten, kann die Ruhelage eines der Verschließwerkzeuge manuell oder motorisch nachgeregelt werden. Überschreitet der Federweg einen Maximalwert, ist vorgesehen, die Clipmaschine anzuhalten. Weiterhin ist ein Positionssensor zur Überwachung der Ruhelage des Verschließwerkzeugs vorgesehen. Diese bekannte Clipmaschine ermöglicht einen annähernd konstanten Verlauf des Federwegs und damit indirekt der Verschlusskraft. Die Messeinrichtung dieser Clipmaschine besitzt aber einen komplizierten Aufbau mit vielen Bauteilen, die potentielle Fehlerquellen darstellen können.

Aufgabe der vorliegenden Erfindung ist es deshalb, eine Clipmaschine und ein Verfahren zur Steuerung dieser Clipmaschine dahingehend zu verbessern, dass die Gefahr einer Fehlmanipulation vermindert, die Belastung der Verschließwerkzeuge verringert und das Verschließen einer Verschlussklammer oder eines Clips um die Verpackungshülle prozesssicherer gestaltet wird.

Die vorliegende Aufgabe wird bezüglich der Clipmaschine durch die Merkmale des Anspruchs 1 gelöst, bezüglich des Verfahrens zum Steuern der Clipmaschine durch die Merkmale des Anspruchs 11. In den sich jeweils anschließenden Unteransprüchen finden sich entsprechende vorteilhafte Ausführungen.

Insbesondere wird eine Clipmaschine zum Abteilen und Verschließen von mit Füllgut befüllten schlauchförmigen Verpackungen mittels Verschlussklammern vorgeschlagen, mit mindestens einer ersten und einer zweiten Verschließwerkzeugeinheit, die zum Setzen und Verschließen wenigstens einer Verschlussklammer (Clip) relativ zueinander zwischen einer Öffnungsstellung und einer Verschlussstellung reversibel bewegbar sind. Erfindungsgemäß ist dabei wenigstens ein mit einer der Verschließwerkzeugeinheiten verbundener Piezo-Aufnehmer vorgesehen, der eingerichtet ist, eine beim Verschließen einer Verschlussklammer oder eines Clips aufgebrachte Verschlusskraft zu messen und einen die Verschlusskraft repräsentierenden Messwert auszugeben.

Ein Piezo-Aufnehmer enthält einen (oder mehrere) s.g. Piezo-Kristall, auf dessen Kristalloberfläche bei mechanischer Beanspruchung elektrische Ladungen entstehen, deren Menge sich proportional zur Beanspruchung verhält. In der vorbeschriebenen Anordnung ist die entstehende Ladung also proportional der Verschlusskraft. Im Folgenden wird in diesem Zusammenhang zur Vereinfachung des Sachverhalts vom Messen der Verschlusskraft mittels des Piezo-Aufnehmers gesprochen. Es können Piezo-Kristalle, wie Quarz, Piezo-Keramiken aber auch alle anderen geeigneten piezoelektrischen Materialien zum Einsatz kommen.

Ein in der vorgeschlagen Weise angeordneter Piezo-Aufnehmer ist zu jedem Zeitpunkt in der Lage, die gerade auf den Verschlussclip wirkende Kraft zu bestimmen. Dadurch kann der Verschließvorgang bei Erreichen eines vorgegebenen Wertes für die Verschlusskraft sofort beendet werden. Ein Überschreiten der vorgegebenen Verschlusskraft ist damit praktisch ausgeschlossen.

In einer vorteilhaften Ausführung der erfindungsgemäßen Clipmaschine ist der Piezo-Aufnehmer in zumindest unmittelbarer Nähe des Hauptkraftflusses der Verschlusskraft angeordnet. In einer solchen Anordnung liegt der Piezo-Aufnehmer unmittelbar im auf den Verschlussclip wirkenden Kraftfluss. Auf den Piezo-Aufnehmer wirkt somit die gleiche Kraft bzw. eine Kraft mit dem gleichen Betrag, wie auf die Verschlussklammer. Eine zusätzliche Umrechnung oder Abwandlung des vom Piezo-Aufnehmers ausgegebenen Wertes, um bspw. geometrische Faktoren eines Verschließhebels, wie eine Durchbiegung aufgrund einer Hebelwirkung, berücksichtigen zu können, sind nicht notwendig. Dadurch wird die Bestimmung der Verschlusskraft einfacher und genauer.

Dabei ist es weiterhin vorteilhaft, wenn der Piezo-Aufnehmer in der Ruhelage der Verschließwerkzeugeinheit unter einer Vorspannung steht, die in einer weiteren Ausführung einstellbar sein kann. Durch diese Vorspannung wird eine bereits vorhandene Anfangskraft simuliert, wobei ein Unterschreiten dieser Kraft auf ein technisches Problem hinweisen kann, wie das Verklemmen eines Schließwerkzeugs, aus dem eine Zugspannung resultieren kann. Die Anzeige eines solchen, von der gewählten Vorspannung abweichenden Wertes kann zu einer entsprechenden Reaktion der Steuerung führen. Durch die Einstellbarkeit der Vorspannung des Piezo-Aufnehmers kann dessen Messbereich verschoben werden, wodurch eine Anpassung des Piezo-Aufnehmers an die Steuerung oder auch an verschiedene Clipgrößen möglich ist. Weiterhin kann durch eine Vorspannung des Piezo-Aufnehmers ein ungewollter Vorzeichenwechsel der Messwerte verhindert werden, wie er bei einer falsch eingestellten oder durch Schwankungen der Umgebungsbedingungen verursachten fehlerhaften Veränderung der Nullstellung auftreten kann. Hiermit kann eine weitere mögliche Fehlerquelle bei der Messung ausgeschaltet werden.

In einer bevorzugten Ausführung ist der Piezoaufnehmer als gekapselter Sensor ausgeführt. Hierdurch ist er vor annähernd allen Umgebungseinflüssen geschützt, wodurch die Genauigkeit der Messwerte erhöht werden kann. Insbesondere kann der Piezoaufnehmer auf diese Weise effizient vor Feuchtigkeit geschützt werden, da Clipmaschinen aus hygienischen Gründen regelmäßig gereinigt werden müssen.

In einer weiterhin bevorzugten Ausführung ist der Piezoaufnehmer am Gegenlager der Verschließwerkzeugeinheiten bzw. ortsfest relativ zum Maschinengehäuse angeordnet, wodurch auch die Zuleitungen des Piezoaufnehmers ortsfest relativ zum Maschinengehäuse angeordnet werden können. Sowohl der Piezoaufnehmer wie auch die Zuleitungen werden daher nicht mit den Verschließwerkzeugen mitbewegt und unterliegen nicht den hierbei auftretenden Beschleunigungskräften. Diese Anordnung schützt den Piezoaufnehmer und die Zuleitungen vor Beschädigungen durch die auftretenden Beschleunigungskräften und ermöglicht so eine zuverlässigere Messung.

Es ist darüber hinaus vorteilhaft, den Piezoaufnehmer in einer geschützten Position anzubringen, um ihn zusätzlich vor Beschädigungen durch bewegte Teile zu schützen. Das kann durch eine Abdeckung des Piezo-Aufnehmers realisiert werden. Der Piezoaufnehmer kann aber auch in einer Öffnung oder Ausnehmung im Gegenlager oder im Maschinenrahmen untergebracht werden.

In der erfindungsgemäßen Clipmaschine kann weiterhin eine Steuereinheit mit einem Ereignisdatenspeicher vorgesehen sein, die eingerichtet ist, den aktuellen Messwert zumindest vorübergehend zu speichern und mit einem ersten ausgewählten Wertebereich zu vergleichen. Bei ausreichendem Speicherplatz können auch Serien von Messwerten über längere Zeit gespeichert werden.

Hierdurch ist es möglich Abweichungen der Verschlusskraft im laufenden Betrieb oder auch nachträglich aus dem Speicher auszulesen, um Rückschlüsse auf eine Fehlbedienung oder eine Fehlfunktion ziehen zu können. Dies ermöglicht unter anderem dem Hersteller der Clipmaschine ein schnelleres Auffinden der Ursachen für eine Betriebsstörung oder einen Defekt an der Maschine oder eine Qualitätskontrolle zu ermöglichen oder zu unterstützen.

Es ist vorteilhaft, wenn die Steuerung eingerichtet ist, den aktuellen Messwert mit einem zweiten ausgewählten Wertebereich zu vergleichen und ein Steuersignal auszugeben, wenn der Messwert den zweiten ausgewählten Wertebereich verlässt. Ein dritter ausgewählter Wertebereich kennzeichnet eine erhöhte Verschlusskraft, die zu Beschädigungen der Clipmaschine der Verschlussclips oder des Verpackungsmaterials führen könnte. Daher ist die Steuereinheit in einer erfindungsgemäßen Ausführung eingerichtet, den aktuellen Messwert mit einem dritten ausgewählten Wertebereich zu vergleichen und die Clipmaschine anzuhalten, wenn der Messwert den dritten ausgewählten Wertebereich verlässt.

In einer weiterhin vorteilhaften Ausgestaltung der erfindungsgemäßen Clipmaschine ist die Steuereinheit eingerichtet, den Verlauf der Verschlusskraft über den Weg und/oder die Zeit aufzunehmen und zu analysieren, um bei Abweichungen von einem vorgegebenen Verlauf ein Signal auszugeben, dass dieses Abweichung anzeigt und/oder in vorbestimmter Weise auf die Clipmaschine einwirkt. Die Analyse des Kraft-Weg-Verlaufs und/oder des Kraft-Zeit-Verlaufs ermöglicht Rückschlüsse auf den Verschleiß beispielsweise der Verschließwerkzeuge oder auch die Qualität der Verschlussclips. Letztlich kann mittels dieser Analyse eine Aussage über die Qualität des Verschlusses getroffen werden. Wird hierbei ein unzulässig hoher Verschleiß festgestellt, kann ein entsprechendes Signal dies anzeigen und automatisch eine Wartung der Clipmaschine anordnen oder den Bediener zu einer Wartung auffordern.

Um sicherzustellen, dass sich die ersten und zweiten Verschließwerkzeugeinheiten zu Beginn eines jeden Verschließvorgangs in einer vorgegebenen Position, wie z.B. die Ruhelage, befinden, ist weiterhin erfindungsgemäß ein Positionssensor vorgesehen, mittels dem die Ruhelage wenigstens einer Verschließwerkzeugeinheit erfassbar ist. Der Positionssensor ist mit der Steuereinheit verbunden und kann bei Detektierung der wenigstens einen Verschließwerkzeugeinheit ein entsprechendes Bereitschaftssignal ausgeben. Als Positionssensor kann bspw. ein Drehgeber eingesetzt werden, dessen Signal zur Einstellung der Ruhelage der wenigstens einen Verschließwerkzeugeinheit verwendet werden kann.

Bezüglich des erfindungsgemäßen Verfahrens zum Steuern einer Clipmaschine ergeben sich die gleichen Vorteile, wie sie vorstehend im Zusammenhang mit der erfindungsgemäßen Clipmaschine beschrieben sind.

Weitere Merkmale und Vorteile der erfindungsgemäßen Clipmaschine sowie des erfindungsgemäßen Verfahrens werden nachstehend unter Bezugnahme auf die beigefügten Figuren in der nachfolgenden Beschreibung der Ausführungsbeispiele erläutert. Die bei der Beschreibung der Ausführungsbeispiele verwendeten Begriffe "oben", "unten", "links" und "rechts" beziehen sich auf die Zeichnungsfiguren in einer Ausrichtung mit normal lesbaren Bezugszeichen und Figurenbezeichnungen. Hierbei zeigen:
- Fig. 1: einen Ausschnitt aus einem ersten Ausführungsbeispiel der erfindungsgemäßen Clipmaschine;
- Fig. 2: einen Ausschnitt aus einem weiteren Ausführungsbeispiel der erfindungsgemäßen Clipmaschine;
- Fig. 3: eine Schemadarstellung eines Ausführungsbeispiels der Steuerung der erfindungsgemäßen Clipmaschine; und
- Fig. 4: ein Ablaufschema des Verschließvorgangs und des erfindungsgemäßen Steuerverfahrens der Clipmaschine.

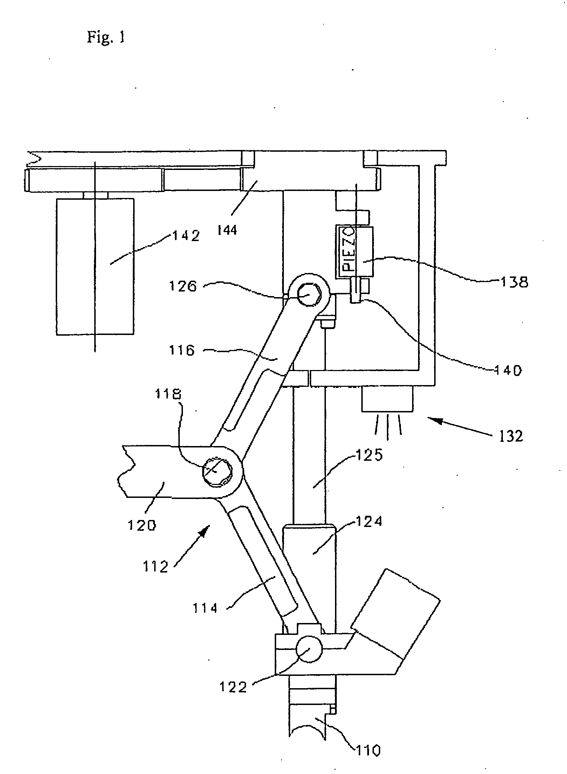

Der Ausschnitt gemäß Fig. 1 zeigt eine erste Verschließwerkzeugeinheit eines ersten Ausführungsbeispiels der erfindungsgemäßen Clipmaschine 100 mit einen Stempel 110. Der Stempel 110 wird über eine Kniehebelanordnung 112 angetrieben. Die Kniehebelanordnung 112 weist einen ersten Hebel 114 und einen zweiten Hebel 116 auf, die ein gemeinsames Kniegelenk 118 bilden. Mit seinem dem Kniegelenk 118 fernen Ende ist der Hebel 114 an einem mit dem Stempel 110 ortsfest verbundenen Zapfen 122 angelenkt. Der zweite Hebel 116 ist mit seinem dem Kniegelenk 118 entgegengesetzten Ende an einem Gegenlager 126 angelenkt. Wenn das Kniehebelgelenk 118 durch eine über eine Koppelstange 120 eingeleitete Kraft gebeugt bzw. gestreckt wird, bewegt sich der Stempel 110 zwischen einer oberen Öffnungsstellung und einer unteren Verschlussstellung auf und ab. Dabei wird der an einem Stempelträger 124 befestigte Stempel 110 teleskopartig durch eine Zylinderführung 125 geführt, welche fest mit dem nicht näher dargestellten Maschinengehäuse verbunden ist.

In der Verschlussstellung ist der Stempel 110 der Matrize einer nicht dargestellten zweiten Verschließwerkzeugeinheit bis auf einen minimalen Verschlussabstand angenähert. Wird die Kniehebelanordnung 112 gestreckt und somit der Stempel 110 in die Verschlussstellung gebracht, wird die zum Verformen und Verschließen eines Clips aufgebrachte Kraft also über das Gegenlager 126 abgeleitet.

Am Gegenlager 126 ist, wie in Fig. 1 gezeigt, ein Piezo-Aufnehmer 138 angeordnet. Er ist in eine Ausnehmung des Gegenlagers 126 eingesetzt, die im dargestellten Ausführungsbeispiel durch zwei nicht näher bezeichnete Vorsprünge gebildet wird. Eine ebenfalls nicht näher dargestellte Fixiereinrichtung 140 hält den Piezo-Aufnehmer 138 in seiner Position in der Ausnehmung. Mittels der Fixiereinrichtung 140 ist es möglich, den Piezo-Aufnehmer 138 zwischen den Vorsprüngen zu verspannen und ihn dadurch mit einer Vorspannung zu beaufschlagen. Hierzu kann die Fixiereinrichtung 140 beispielsweise als manuell betätigbare Stellschraube ausgeführt sein, mittels der die Vorspannung frei wählbar eingestellt werden kann. Selbstverständlich ist es möglich, einen automatisierten Antrieb vorzusehen, der mit einer Steuereinrichtung verbunden und von dieser gesteuert werden kann, um die Vorspannung einzustellen. In dieser Anordnung ist der Piezo-Aufnehmer 138 ein autarkes Messsystem, d.h. mit ihm kann unabhängig weiteren Systemkomponenten die Verschlusskraft ermitteln.

Im dargestellten Ausführungsbeispiel entsprechend Fig. 1 ist das Gegenlager 126 über einen Stellantrieb 142, 144 direkt und starr mit dem Maschinengehäuse verbunden. Der Stellantrieb 142, 144 enthält einen Antriebsmotor 142, beispielsweise einen Schrittmotor, und eine Stelleinrichtung 144. Der Schrittmotor 142 treibt die Stelleinrichtung 144, die z.B. eine an sich bekannte Stellschraube sein kann, an bspw. über einen schlupffrei arbeitenden Zahnriemen. Die durch den Antriebsmotor 142 in Rotation um ihre Mittellängsachse, die mit der Mittellängsachse der Zylinderführung 125 zusammenfällt, versetzte Stelleinrichtung 144 verschiebt das Gegenlager 126 gegenüber dem Maschinengehäuse entlang ihrer Mittellängsachse. Hierdurch ist eine Einstellung der Ruhelage des Stempels 110 möglich.

Die beim Verschließen eines Clips aufgebrachte Verschlusskraft wird in dem gezeigten Ausführungsbeispiel über die Kniehebelanordnung 112 und das Gegenlager 126 auf das Gehäuse 134 abgeleitet. Dabei wird das Gegenlager 126 gestaucht. Diese Stauchung fällt gering aus, genügt aber, um auf den in der Ausnehmung des Gegenlagers 126 angeordneten Piezo-Aufnehmer 138 eine Kraft auszuüben. Hierdurch wird der Piezo-Aufnehmer 138 verformt und gibt ein elektrisches Signal ab, das der die Stauchung verursachenden Kraft, also der Verschlusskraft, entspricht.

Weiterhin ist ein Positionssensor 132 so am Maschinengehäuse angeordnet, dass er in der Lage ist, die Ruhelage des Stempelträgers 124 und damit des an diesem befestigten Stempels 110 festzustellen. Im dargestellten Ausführungsbeispiel ist dies ein berührungslos messender Sensor, wie z.B. ein optischer oder kapazitiver Geber. Es ist aber auch möglich, einen mechanisch arbeitenden Sensor einzusetzen. Weiterhin kann ein Drehgeber als Sensor zur Detektierung der Ruhelage des Stempelträgers 124 und damit des an diesem befestigten Stempels 110 verwendet werden, mittels dessen Signal der Schrittmotor des Stellantriebs 142, 144 auch direkt ansteuerbar sein kann.

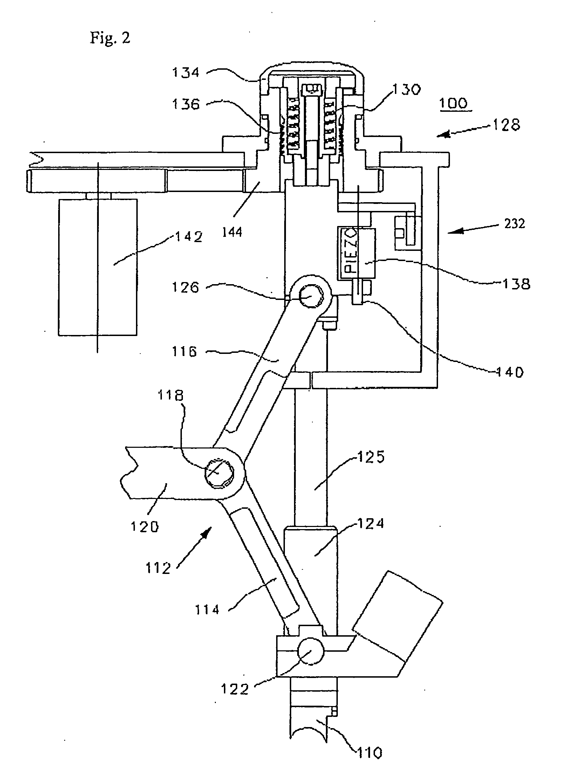

Die bei einem Verschließvorgang aufgebrachte Verschlusskraft wird einzig durch den in der Ausnehmung des Gegenlagers 126 angeordneten Piezo-Aufnehmer 138 in der vorbeschriebenen Weise bestimmt. Durch diese sehr einfache Messanordnung werden mögliche Fehlerquelle ausgeschaltet und die Genauigkeit des Messergebnisses verbessert, da sich die Anzahl der verformten Bauteile verringert hat und auf zusätzliche oder unnötig komplizierte Messvorrichtungen verzichtet werden kann. Die Einstellung oder Korrektur der Ruhelage des Stempels 110 erfolgt bspw. in der anhand der Fig. 2 näher beschriebenen Weise.

Der in Fig. 2 dargestellte Ausschnitt eines weiteren Ausführungsbeispiels der erfindungsgemäßen Clipmaschine entspricht weitgehend dem Ausführungsbeispiel gemäß Fig. 1. Identische und funktionsgleiche Bauteile sind mit gleichen Bezugszeichen versehen. Die Clipmaschine entsprechend Fig. 2 weist die dem Ausführungsbeispiel der Fig. 1 identische erste Verschließwerkzeugeinheit mit dem Stempel 110, die Kniehebelanordnung 112, den Stellantrieb 142, 144 sowie den am Gegenlager angeordneten Piezo-Aufnehmer 138 auf.

Im Unterschied zum Ausführungsbeispiel der Fig. 1 ist das Gegenlager 126 über eine Stütz- und Lagereinrichtung 128 mit dem Maschinengehäuse verbunden. Im Einzelnen weist die Stütz- und Lagereinrichtung 128 u.a. eine Feder 130 und den Stellantrieb 142, 144 auf. Die Feder 130 ist eine Druckfeder, die an ihrem dem Gegenlager 126 entgegengesetzten Ende gegen ein Gehäuse 134 abgestützt ist, welches ortsfest an dem Maschinengehäuse der Clipmaschine 100 fixiert ist.

Wie der Fig. 2 weiter zu entnehmen ist, ist im Bereich der ersten Verschließwerkzeugeinheit ein Positionssensor 232 angeordnet. Der Positionssensor 232 ist mit dem Maschinengehäuse fest verbunden. Über einen nicht näher bezeichneten Aufnehmer kann der Positionssensor 232 Veränderungen der Position des Gegenlagers 126 gegenüber dem Maschinengehäuse feststellen. Der hier dargestellte Positionssensor 232 ist als mechanisch arbeitender Wegsensor ausgeführt. Es können aber selbstverständlich andere Sensoren zum Einsatz kommen, die in der Lage sind, eine Veränderungen der Position des Gegenlagers 126 festzustellen, wie induktive oder optische Aufnehmer.

Bei einem Verschließvorgang wird auch die Feder 130, entsprechend ihrer Federkennlinie, um ein von der Verschlusskraft abhängiges Maß komprimiert. Anhand des Federwegs kann, zusätzlich zum Signal des Piezo-Aufnehmers 138, auf die Höhe der Verschlusskraft geschlossen werden. Zur Begrenzung des Federweges, oder um einen bestimmten Bereich der Federkennlinie der Feder 130 anfahren zu können ist es möglich, die Feder 130 vorzuspannen. Wird eine Verstellbarkeit der Vorspannung vorgesehen, kann hierdurch bspw. eine Anpassung der Steuerung vorgenommen werden.

Zusätzlich oder auch alternativ hierzu kann mittels einer solchen Federanordnung eine Überlastsicherung realisiert werden. Hierbei kann eine Feder gewählt werden, die sich erst bei Erreichen einer bestimmten Kraft, wie z.B. der gewünschten Verschlusskraft oder einer geringfügig höheren Kraft, verformt, sodass ein Überschreiten der Verschlusskraft und damit eine Beschädigung der Clipmaschine, des Verpackungsmaterials und/oder des Verschlussclips durch ein Nachgeben der Feder verhindert wird. Wird, wie vorbeschrieben, eine Verstellbarkeit der Vorspannung vorgesehen, kann dadurch die Kraft eingestellt wrden, bei der die Überlastsicherung aktiviert wird.

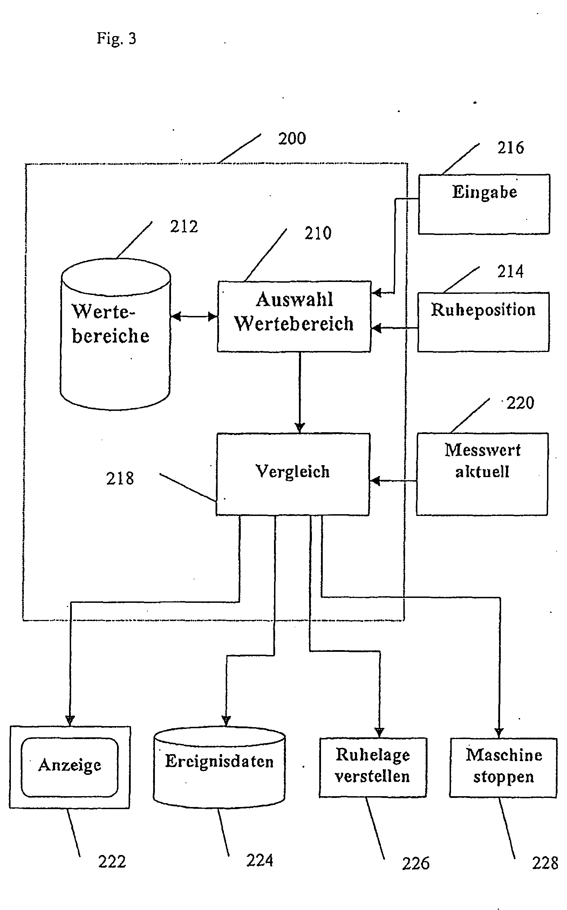

Die schematische Darstellung der Fig. 3 zeigt eine beispielhafte Steuerung 200 für die erfindungsgemäße Clipmaschine entsprechend den Ausführungsbeispielen der Fig. 1 und 2, welche eine Auswahleinrichtung 210 für die Wertebereiche sowie eine Datenbank 212 für die Wertebereiche aufweist. Die Auswahl eines bzw. mehrerer Wertebereiche aus der Datenbank geschieht in Abhängigkeit von dem vom Positionssensor 214 ausgegebenen Ruhepositionswert und/oder anhand einer eingelesenen Produktinformation. Die Produktinformation kann beispielsweise vor Beginn der Produktion manuell über eine Eingabeeinheit 216 unmittelbar eingegeben werden. Alternativ kann die Produktinformation auch aus einer Produktinformationsdatenbank (nicht gezeigt) automatisch eingelesen werden.

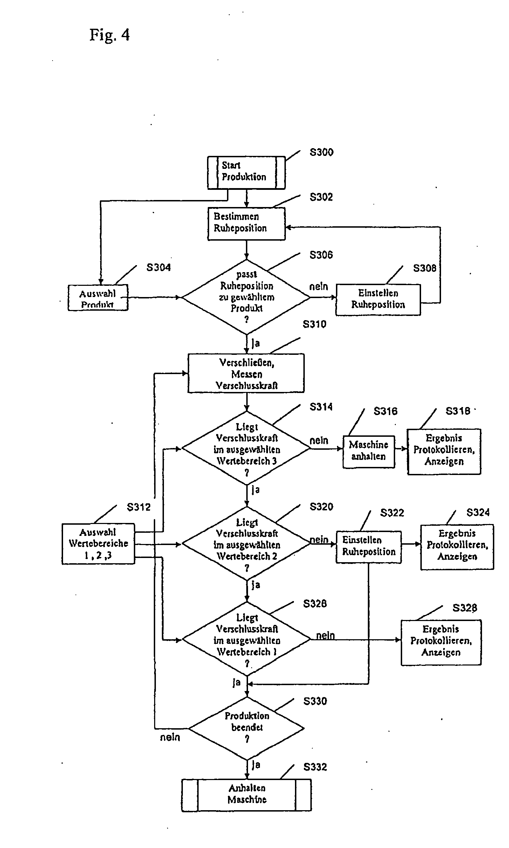

Nachdem die Auswahleinrichtung 210 eine Auswahl für den oder die Wertebereiche getroffen hat, wird mittels einer Vergleichseinrichtung 218 der Steuerung 200 ein Vergleich des oder der Wertebereiche mit dem von der Messeinrichtung 220 ausgegebenen Messwert, welcher die beim Verschließen eines Clips aufgebrachten Verschlusskraft repräsentiert, verglichen. Die Vergleichseinheit 218 gibt dann einen Befehl an eine Anzeigeeinrichtung 222 zum Anzeigen des Ereignisses und/oder an einen Ereignisdatenspeicher 224 zum Protokollieren des Ereignisses und/oder an einen Verstellantrieb 226 zum Ein- bzw. Nachstellen der Ruhelage und/oder an eine Hauptmaschinensteuerung 228 zum Anhalten der Clipmaschine aus. Die Auswahl, an welche der Komponenten 222, 224, 226 und 228 ausgegeben wird, trifft die Vergleichseinrichtung 218 anhand des Vergleichs des von der Messeinrichtung 220 erhaltenen Messwerts mit mehreren Wertebereichen, wie beispielhaft anhand der Fig. 4 erläutert wird. Die Wertebereiche sind typischerweise unterschiedlich, können aber auch teilweise oder vollständig deckungsgleich sein.

Die Anzeigeeinrichtung 222 zeigt das Ereignis an. Dies kann bevorzugt optisch, aber auch oder zusätzlich akustisch geschehen. Vorteilhafterweise bietet sich hierzu ein Display oder Bildschirm in Kombination mit einem akustischen Warnsignal an.

Anhand Fig. 4 soll nun ein Ausführungsbeispiel des erfindungsgemäßen Verfahrens zum Steuern einer Clipmaschine erläutert werden.

Mit jedem Produktionsstart S300 beginnt die Initialisierung der Clipmaschine, welche u. a. das erfindungsgemäße Steuerverfahren beinhaltet. Zugleich wird mit der Initialisierung eine Produktauswahl getroffen S304. Das Einrichtverfahren beginnt mit dem Bestimmen der Ruheposition S302 mittels des mit einer einstellbaren Verschließwerkzeugeinheit gekoppelten Positionssensors, der einen Ruhepositionswert, welcher die Ruhelage der eingestellten Verschließwerkzeugeinheit repräsentiert, erzeugt und ausgibt. Anhand der Produktsauswahl wird in einem nächsten Verfahrensschritt S306 geprüft, ob der bestimmte Ruhepositionswert zu dem ausgewählten Produkt passt. Ist dies nicht der Fall, wird die Ruheposition im Verfahrensschritt S308 eingestellt. Das Einstellen erfolgt mittels eines Stellantriebs, der manuell oder automatisch durch ein Signal gesteuert werden kann, welches von der Steuerung entsprechend der Produktauswahl ausgegeben wird. Gemäß einer weiteren Alternative kann ein beliebiger motorischer Antrieb über den quasi permanent abgegriffenen Ruhepositionswert geregelt sein, so dass er das Verschließwerkzeug in die gewünschte Soll-Position fährt, die zu dem gewählten Produkt passt.

Ist der gewünschte Ruhepositionswert erreicht, wird mit dem ersten (und bei jedem weiteren) Verschlussvorgang die Verschlusskraft gemessen S310. Die gemessene Verschlusskraft wird mit einem zuvor im Schritt S312 ausgewählten Wertebereich, welcher anhand der im Schritt S304 getroffenen Produktauswahl ermittelt wird, in der Abfrage S314 verglichen. Ergibt der Vergleich, dass die gemessene Verschlusskraft außerhalb des ausgewählten Wertebereichs 3 liegt, wird die Clipmaschine im Schritt S316 angehalten und im Schritt 318 das Ereignis protokolliert und/oder angezeigt.

Liegt die gemessene Verschlusskraft in dem ausgewählten Wertebereich 3, wird in einem nächsten Schritt S320 die Verschlusskraft mit einem zweiten ausgewählten Wertebereich verglichen. Ergibt der Vergleich, dass die Verschlusskraft außerhalb des Wertebereichs 2 liegt, wird die Ruheposition im Schritt S322 nachgestellt und im Schritt S324 das Ereignis protokolliert und/oder angezeigt.

Ergibt die Überprüfung im Schritt S320, dass die gemessene Verschlusskraft auch innerhalb des ausgewählten Wertebereichs 2 liegt, wird in einem nächsten Schritt S326 überprüft, ob sie in einem ersten ausgewählten Wertebereich liegt. Trifft dies nicht zu, so wird das Ereignis in Schritt S328 protokolliert und/oder angezeigt.

Das Ereignisprotokoll kann in jedem der Schritte S318, S324 und S328 sowohl Informationen über die Produktauswahl, die eingestellte bzw. bestimmte Ruheposition, den ausgewählten Wertebereich für die Verschlusskraft als auch die gemessene Verschlusskraft und die erfolgte Aktion beinhalten.

Ergibt die Prüfung in Schritt S326 hingegen, dass die gemessene Verschlusskraft auch im ausgewählten Wertebereich 1 liegt, wird im nächsten Schritt S330 abgefragt, ob die Produktion beendet ist und/oder ob zwischenzeitlich ein manueller Befehl zum Anhalten der Maschine erfolgt ist. Die selbe Abfrage, ob die Produktion beendet oder ein Stoppbefehl ergangen ist, in Schritt S330 erfolgt auch auf den Schritt S322 des Einstellens der Ruheposition, wenn die gemessene Verschlusskraft außerhalb des ausgewählten Wertebereichs 2 liegt. Trifft dies zu, so wird im Schritt S332 die Maschine angehalten. Andernfalls wird mit Schritt 310 der nächste Verschlusszyklus in Gang gesetzt.

Bei dem in Fig. 4 gezeigten Ausführungsbeispiel sind die Wertebereiche so gestaffelt, dass bei Über- bzw. Unterschreiten erster Grenzwerte dies lediglich protokolliert und/oder zur Anzeige gebracht wird, um beispielsweise einen Hinweis auf eine mögliche Fehlerquelle zu erhalten, deren Auswirkungen jedoch im Hinblick auf den Verschleiß der Clipmaschine und die Haltbarkeit des erzielten Verschlusses hinnehmbar ist. Über- bzw. unterschreitet die Verschlusskraft zweite, in der Regel einen größeren Wertebereich aufspannenden Grenzwerte, so wird die Ruheposition nachgestellt, um die Verschlusskraft wieder in einen akzeptablen Wertebereich zu bringen. Ob die Verstellung der Ruheposition ausreichend war, wird beim nächsten Verschlusszyklus durch erneutes Messen der Verschlusskraft überprüft. Auf diese Weise wird ein geschlossener Regelkreis erzeugt. Sollte die Verschlusskraft allerdings außerhalb eines noch weiteren dritten Wertebereichs liegen, was in der Regel infolge einer Fehlfunktion oder grober Fehlbedienung auftritt, wird die Maschine sofort angehalten, um den Fehler beheben zu können, bevor die Produktion oder gar die Maschine Schaden nehmen kann.

Durch die Verwendung eines Piezo-Aufnehmers zum Messen der Verschlusskraft ist es möglich, die Kraft nicht nur zu dem Zeitpunkt zu messen, an dem der Verschlussabstand erreicht ist, sondern zu jedem beliebigen Zeitpunkt während eines Verschließvorgangs. Mit den so aufgezeichneten Werten kann für jeden Verschließvorgang ein Kraft-Zeit-Verlauf und/oder ein Kraft-Weg-Verlauf aufgezeichnet und ausgewertet werden.

Die Auswertung diese Verläufe, bspw. durch einen Vergleich mit vorgegebenen Kraftverläufen, ermöglicht Aussagen über die Qualität des Verschlusses. Aus Abweichungen von idealen Kraftverläufen kann ebenfalls auf mögliche Qualitätsschwankungen bei den Verschlussklammern oder den Verschleiß der Verschließwerkzeuge geschlossen werden. In einer Weiterentwicklung der vorbeschriebenen Steuerung ist es möglich, die Ergebnisse dieser Auswertung in die Steuerung der Clipmaschine einfließen zu lassen, in dem z.B. bei zu hohem Verschleiß der Verschließwerkzeuge ein entsprechendes Signal ausgegeben oder die Clipmaschine angehalten wird.

Das Ablaufschema gemäß Fig. 4 stellt nur eine beispielhafte Ausführungsform dar. Die Anzahl der Wertebereiche kann reduziert oder auch erhöht werden. Es kann somit eine feinere Abstufung erfolgen. Die Wertebereiche können teilweise oder vollständig identisch sein. Der oder die Wertebereiche können anstelle von oder zusätzlich zu der im Schritt S304 getroffenen Produktauswahl anhand der in Schritt S302 bestimmten Ruheposition ausgewählt werden. Auch ist das erfindungsgemäße Steuerverfahren S310 bis S328 nicht zwangsläufig in der in Fig. 4 dargestellten Weise in den Produktionsablauf eingebunden. Insbesondere ist möglich, verschiedene Zwischenschritte oder Unterprogramme in den dargestellten Verfahrensablauf, vor allem vor Schritt S310 und/oder nach den Schritten S326 und S328 zu integrieren. Es ist als optional zu verstehen, dass eine Produktauswahl gemäß Schritt S304 und eine Prüfung gemäß Schritt S306 stattfindet. Das Einstellen in Schritt S308 sowie das Nachstellen in Schritt S322 der Ruheposition kann entsprechend manuell oder automatisch erfolgen. Beispielsweise kann auch vorgesehen sein, dass die Schritte S302 bis S308 zum Einstellen der Ruheposition nicht nach dem Produktionsstart sondern nach der Produktauswahl vorgenommen wird, welche unabhängig von einen Startsignal erfolgt.

In einer weiteren, nicht gezeigten Ausgestaltung der erfindungsgemäßen Clipmaschine ist es möglich, das Ausführungsbeispiel der Fig. 2 dahingehend zu modifizieren, dass auf den Stellantrieb 142, 144 verzichtet wird und das Gegenlager 126 direkt mit dem Maschinengehäuse verbunden wird. Eine Einstellung der Ruhelage des Stempels 110 wäre dann nicht mehr möglich. Wie bereits erwähnt, kann mittels des Piezo-Aufnehmers 138 die auf den Stempel 110 wirkende Kraft zu jedem Zeitpunkt eines Verschließvorgangs gemessen werden kann. Daher könnte in diesem Fall die Steuerung dahingehend modifiziert werden, dass der Antrieb des Stempels 110 bei Erreichen eines bestimmten Wertes für die Verschlusskraft abgeschaltet und eine Bewegung in die entgegengesetzte Richtung eingeleitet wird. Die Maschinenkonstruktion und die Steuerung könnten so deutlich vereinfacht werden.

Es ist weiterhin möglich, den Piezo-Aufnehmer 138 in eine in das Gegenlager 126 eingebrachte Durchbrechung, wie eine Bohrung o.ä., einzusetzen. Der Piezo-Aufnehmer 138 würde sich dann unmittelbar im Zentrum des Hauptkraftflusses befinden, wodurch eine noch genauere Messung der Verschlusskraft erreichbar wäre.

Der Piezo-Aufnehmer 138 kann, unabhängig von seiner im Zusammenhang mit der Steuerung 200 beschriebenen Funktion, auch als reine Überwachungseinrichtung eingesetzt werden, die das Stillsetzen der Clipmaschine auslöst, wenn ein bestimmter Messwertbereich über- bzw. unterschritten wird. Wenn sichergestellt werden kann, dass die Verschlusskraft einen voreingestellten Bereich unter normalen Betriebsbedingungen nicht verlässt, kann dadurch die Steuerung der erfindungsgemäßen Clipmaschine weiter vereinfacht werden. Da die Clipmaschine dann nur in Notfällen, wie einem Maschinenschaden oder Verschleißerscheinungen und in denen eine Reparatur anfällt, durch den Piezo-Aufnehmer 138 angehalten wird, kann eine Nachregelung der Verschlusskraft durch die Steuerung 200 dann ganz entfallen.

## Patentansprüche

1. Clipmaschine (100) zum Abteilen und Verschließen von mit Füllgut befüllten schlauchförmigen Verpackungen mittels Verschlussklammern, mit wenigstens einer ersten und einer zweiten Verschließwerkzeugeinheit, die zum Setzen und Verschließen wenigstens einer Verschlussklammer (Clip) relativ zueinander zwischen einer Öffnungsstellung und einer Verschlussstellung reversibel bewegbar sind,
**dadurch gekennzeichnet, dass** wenigstens ein mit einer der Verschließwerkzeugeinheiten verbundener Piezo-Aufnehmer (138) vorgesehen ist, der eingerichtet ist, eine beim Verschließen einer Verschlussklammer aufgebrachte Verschlusskraft zu messen und einen die Verschlusskraft repräsentierenden Messwert auszugeben,
wobei der Piezo-Aufnehmer (138) in der Ruhelage der Verschließwerkzeugeinheit unter einer Vorspannung steht, und
wobei die Vorspannung des Piezo-Aufnehmers (138) mittels einer Fixiereinrichtung (140) einstellbar ist.

2. Clipmaschine nach Anspruch 1,
**dadurch gekennzeichnet, dass** der Piezo-Aufnehmer (138) in zumindest unmittelbarer Nähe des Hauptkraftflusses der Verschlusskraft angeordnet ist.

3. Clipmaschine nach Anspruch 1 oder 2,
**dadurch gekennzeichnet, dass** der Piezoaufnehmer (138) als gekapselter Sensor ausgeführt ist.

4. Clipmaschine nach einem der Ansprüche 1 bis 3,
**dadurch gekennzeichnet, dass** der Piezoaufnehmer (138) am Gegenlager (126) der Verschließwerkzeugeinheiten angeordnet ist.

5. Clipmaschine nach einem der Ansprüche 1 bis 4,
**dadurch gekennzeichnet, dass** eine Steuereinheit (200) mit einem Ereignisdatenspeicher (224) vorgesehen ist, die eingerichtet ist, den aktuellen Messwert zumindest vorübergehend zu speichern und mit einem ersten ausgewählten Wertebereich zu vergleichen.

6. Clipmaschine nach einem der Ansprüche 1 bis 5,
**dadurch gekennzeichnet, dass** die Steuereinheit (200) eingerichtet ist, den aktuellen Messwert mit einem zweiten ausgewählten Wertebereich zu vergleichen und ein Steuersignal auszugeben, wenn der Messwert den zweiten ausgewählten Wertebereich verlässt.

7. Clipmaschine nach einem der Ansprüche 1 bis 6,
**dadurch gekennzeichnet, dass** die Steuereinheit (200) eingerichtet ist, den aktuellen Messwert mit einem dritten ausgewählten Wertebereich zu vergleichen und die Clipmaschine anzuhalten, wenn der Messwert den dritten ausgewählten Wertebereich verlässt.

8. Clipmaschine nach einem der Ansprüche 1 bis 7,
**dadurch gekennzeichnet, dass** die Steuereinheit (200) eingerichtet ist, den Verlauf der Verschlusskraft über den Weg und/oder die Zeit aufzunehmen.

9. Clipmaschine nach Anspruch 8,
**dadurch gekennzeichnet, dass** die Steuereinheit (200) eingerichtet ist, den Verlauf der Verschlusskraft über den Weg und/oder die Zeit zu analysieren und bei Abweichungen von einem vorgegebenen Verlauf ein Signal auszugeben, dass dieses Abweichung anzeigt und/oder in vorbestimmter Weise auf die Clipmaschine (100) einwirkt.

10. Clipmaschine nach einem der Ansprüche 1 bis 9,
**dadurch gekennzeichnet, dass** ein Positionssensor (132, 232) vorgesehen ist, mittels dem die Ruhelage wenigstens einer Verschließwerkzeugeinheit erfassbar ist.

11. Verfahren zum Steuern einer Clipmaschine (100) zum Abteilen und Verschließen von mit Füllgut befüllten schlauchförmigen Verpackungen mittels Verschlussklammern, mit wenigstens einer ersten und einer zweiten Verschließwerkzeugeinheit, die zum Setzen und Verschließen wenigstens einer Verschlussklammer (Clip) relativ zueinander zwischen einer Öffnungsstellung und einer Verschlussstellung reversibel bewegbar sind,
**gekennzeichnet durch** das Messen einer beim Verschließen eines Clips aufgebrachten Verschlusskraft mittels wenigstens eines mit einer der Verschließwerkzeugeinheiten verbundenen Piezo-Aufnehmer (138)
wobei der Piezo-Aufnehmer (138) in der Ruhelage der Verschließwerkzeugeinheit unter einer Vorspannung steht,
wobei die Vorspannung des Piezo-Aufnehmers (138) mittels einer Fixiereinrichtung (140) einstellbar ist,
und **durch** das Ausgeben eines die Verschlusskraft repräsentierenden Messwerts.

12. Verfahren nach Anspruch 11,
**gekennzeichnet durch** das Speichern und Vergleichen des aktuellen Messwerts mit einem ersten ausgewählten Wertebereich.

13. Verfahren nach Anspruch 11 oder 12,
**gekennzeichnet durch** das Vergleichen des aktuellen Messwerts mit einem zweiten ausgewählten Wertebereich und das Ausgeben eines Steuersignals, wenn der Messwert den zweiten ausgewählten Wertebereich verlässt.

14. Verfahren nach Anspruch 11 oder 12,
**gekennzeichnet durch** das Vergleichen des aktuellen Messwerts mit einem dritten ausgewählten Wertebereich und das Anhalten der Clipmaschine (100), wenn der Messwert den dritten ausgewählten Wertebereich verlässt.

15. Verfahren nach einem der vorstehenden Ansprüche,
**gekennzeichnet durch** das Analysieren des Verlaufs der Verschlusskraft über den Weg und/oder die Zeit und das Anzeigen einer Abweichung von einem vorgegebenen Verlauf und/oder das Einwirken auf die Clipmaschine (100) in vorbestimmter Weise bei einer Abweichungen von einem vorgegebenen Verlauf.
